# EUROPÄISCHE PATENTSCHRIFT

(11) **EP 2 271 507 B1**
(45) Veröffentlichungstag und Bekanntmachung des Hinweises auf die Patenterteilung: **09.11.2011**
(21) Anmeldenummer: 09737731.1
(22) Anmeldetag: 28.04.2009
(51) Int. Cl.: B60C 23/04

(54) **VERFAHREN, SYSTEM UND SYSTEMKOMPONENTEN ZUR DRAHTLOSEN REIFENDRUCK-ÜBERWACHUNG**
METHOD, SYSTEM, AND SYSTEM COMPONENTS FOR THE WIRELESS MONITORING OF A TIRE PRESSURE
PROCÉDÉ, SYSTÈME ET ÉLÉMENTS DE SYSTÈME POUR LA SURVEILLANCE SANS FIL D'UNE PRESSION DE PNEUMATIQUE

(30) Priorität: 29.04.2008 DE 102008021466
(43) Veröffentlichungstag der Anmeldung: 12.01.2011
(73) Patentinhaber: BorgWarner BERU Systems GmbH, 71636 Ludwigsburg (DE)
(72) Erfinder: WAGNER, Markus, 71638 Ludwigsburg (DE)
(74) Vertreter: Twelmeier Mommer & Partner
(86) Internationale Anmeldenummer: PCT/DE2009/000580
(87) Internationale Veröffentlichungsnummer: WO 2009/132623

(56) Entgegenhaltungen:
- EP-A- 1 110 764
- WO-A-2005/069993
- DE-A1- 3 703 128
- US-A1- 2005 073 400

## Beschreibung

Die Erfindung betrifft ein Verfahren zum Überwachen und drahtlosen Signalisieren von Daten, die Angaben über die in Luftreifen von Rädern eines Fahrzeuges herrschenden Druckzustände enthalten. Ein Verfahren mit dem Oberbegriff des Anspruchs 1 angegebenen Merkmalen sowie ein entsprechendes System sind aus der WO 2005/06993 A bekannt.

Außerdem betrifft die Erfindung ein dafür geeignetes System sowie Systemkomponenten, wie ein Steuergerät, das in dem Fahrzeug angeordnet ist, und ein elektronisches Modul, das in einem der Räder angeordnet ist und die Daten drahtlos an das Steuergerät sendet.

In dem Artikel "Reifendruck-Kontrollsystem, Tyre Safety System-TSS" vom Februar 2005, der in der automobiltechnischen Zeitschrift (ATZ) publiziert wurde (Ausgabe 2/2005, VIEWEG Verlag, Deutschland) werden Reifendruck-Kontrollsysteme beschrieben, bei denen verschiedene Daten mit Angaben über die in Luftreifen von Rädern eines Fahrzeugs herrschenden Zustände überwacht und drahtlos signalisiert werden. Wie dort anhand des Bildes 3 und 4 beschrieben wird, enthält ein solches bekanntes System mehrere jeweils in den Rädern des Fahrzeugs angeordnete elektronische Module, die auch als Radelektronik bezeichnet werden. Diese erfasst über Sensoren die in dem jeweiligen Luftreifen herrschenden Zustände, wie Druck und Temperatur, und sendet entsprechende Daten an eine zentrale Einheit, d.h. an ein im Fahrzeug angeordnetes zentrales Steuergerät (siehe dort Bild 1). Dieses wertet wiederum die Daten aus, um beispielsweise eine im Fahrzeuginneren angebrachte Reifendruckanzeige (siehe Bild 5) anzusteuern. Da die Radelektronik von einer Miniaturbatterie, üblicherweise einer Lithiumbatterie, versorgt wird, muss dafür Sorge getragen werden, dass wenig Strom bzw. Energie verbraucht wird, um eine möglichst lange Lebensdauer der Batterie zu erzielen. Zu diesem Zweck werden z.B. die Messzyklen der Sensorik in Abhängigkeit von der Fahrzeugbewegung beeinflusst (s. dort Seite 3, Abschnitt 2.2). Demnach werden nur bei Fahrzeugbewegung die Daten in kürzeren Messintervallen erfasst und ausgesendet. Die Übertragung der Daten erfolgt dabei vorzugsweise in Form eines Datentelegramms (s. dort Tabelle 2).

Die Steuerung des Aussendens der Telegramme kann auch bei bestimmten Systemen durch einen Abfrage- bzw. einen Trägersender erfolgen. Dabei wird von dem Steuergerät ein Triggersignal gesendet, um die jeweilige Radelektronik bei Bedarf zu aktivieren, so dass diese dann die Daten erfasst und an das Steuergerät zurück sendet. Für diese Lösung sind also ein Rückkanal sowie ein Trigger-Sender bzw. -Empfänger erforderlich. Zwar ist es damit auch möglich, die einzelnen Radelektroniken in den Rädern konkret anzusprechen, um beispielsweise die genaue Positionszuordnung der Räder zu erkennen, jedoch erfordert diese Lösung aber einen gewissen Aufwand. Wie dort auch anhand des Bildes 1, rechte Darstellung beschrieben wird, soll bei neueren Systemen möglichst auf einen Rückkanal bzw. auf Trigger-Sender und -Empfänger verzichtet werden können.

Aus der EP 1467877 B1 ist ebenfalls bekannt, zur Erhöhung der Batterielebensdauer die jeweilige Radelektronik mittels eines Abfragesenders, d.h. eines Triggersenders, nur bedarfsweise zu aktivieren. Dort wird eine besonders zuverlässige Reifendrucküberwachung erreicht, indem das System so ausgelegt wird, dass auch bei Ausfall des Abfragesignals, aus welchem Grunde auch immer, die Radelektronik von sich aus mit einer vorgebbaren minimalen Senderate die Daten aussendet. Somit könnte bei dem dort beschriebenen Verfahren und System evtl. auf einen Abfragesender verzichtet werden. Jedoch würden die Daten dann nur mit einer recht geringen Senderate übertragen werden.

Aus der EP 0915764 B1 ist ein Verfahren zum Verarbeiten von Signalen eines Reifendrucküberwachungssystems bekannt, bei dem die Radelektroniken von sich aus die Daten in Form von Datentelegrammen an das Steuergerät senden und keine konkrete Triggerung bzw. Abfrage erforderlich ist. Um dennoch ohne Triggerung bzw. Rückkanal auch die Radpositionen bestimmen zu können, wird dort vorgeschlagen, am Steuergerät mehrere Empfangsantennen vorzusehen, die über die Antennen hereinkommenden Signale gemeinschaftlich zu verarbeiten und auf Signalintensivität hin zu untersuchen. Durch zyklisches Abschatten, der einzelnen Empfangsantennen kann dann festgestellt werden, bei welchem Abschalten der größte Intensitätsverlust im Funksignal erfolgt, wobei angenommen wird, dass es sich dann um diejenige Antenne handeln muss, welche der Radelektronik am nächsten liegt.

Bei dieser Lösung kann also vollständig auf ein Triggersystem verzichtet werden, jedoch ist auf Seiten der Empfangsantennen ein höherer Aufwand erforderlich. Weiter ist ein Verfahren bekannt, das einen Dutycycle von 50 % LF im Stand und 100 % im Fahrbetrieb nutzt und den entsprechenden Energieverbrauch zur Folge hat.

Aufgabe der vorliegenden Erfindung ist es daher, die ein Verfahren und ein System bzw. Vorrichtungen der eingangs genannten Art vorzuschlagen, die die genannten Nachteile überwinden und dennoch mit geringem Aufwand realisiert werden können. Insbesondere sollen ein Verfahren zum Überwachen und drahtlosem Signalisieren von Daten sowie ein dafür geeignetes System und die zugehörigen Systemkomponenten vorgeschlagen werden, mit denen eine Reduzierung des Strombedarfs in der Radelektronik erzielt werden kann.

Gelöst wird die Aufgabe durch ein Verfahren mit den Merkmalen des Anspruchs 1 sowie durch ein System, ein Steuergerät und ein elektronisches Modul mit den Merkmalen des jeweils nebengeordneten Anspruchs.

Demnach wird vorgeschlagen, dass während eines ersten Modus, der einem Stillstands-Zustand des Fahrzeuges zugeordnet ist, keine Daten gesendet werden, und dass während mindestens einem weiteren Modus, der einem anderem Zustand des Fahrzeugs zugeordnet ist, die Daten in Form von Telegrammen von dem jeweiligen elektronischen Modul bzw. der Radelektronik an das Steuergerät gesendet werden, wobei zumindest zeitweise von dem jeweiligen elektronischen Modul mehrere Telegramme mit den selben Daten in einer gehäuften Weise hintereinander an das Steuergerät gesendet werden.

Durch diese Art der Übertragung erfolgt eine gebündelte Anhäufung mehrerer Telegramme (hier auch als Burst-Mode bezeichnet), so dass die erforderlichen Daten nur zeitweise, dann aber in konzentrierter Form, an das Steuergerät gesendet werden. Hierbei wird ein Lernen der Radposition ermöglicht. Dadurch wird insgesamt die Sendezeitdauer verkürzt, die eigentliche Nutzdauer aber zur Übertragung der Daten aufgrund der Anhäufung der Telegramme nicht oder nur unwesentlich verkürzt, so dass kein Datenverlust auftritt.

Vorteilhafte Ausgestaltungen der Erfindung ergeben sich aus den Unteransprüchen.

Demnach ist es von Vorteil, wenn während eines zweiten Modus, der einem Fahrt-Zustand des Fahrzeuges zugeordnet ist, die Daten in Form eines ersten Telegramms gesendet werden, und wenn während eines dritten Modus, der einem Anfahr-Zustand der Fahrzeugs zugeordnet ist, die Daten nur zu einem Teil in Form eines zweiten Telegramms gesendet werden, das kürzer als das erste Telegramm ist. Somit wird hier nochmals zwischen dem eigentlichen Fahrt-Zustand des Fahrzeuges und einem Anfahr-Zustand differenziert, wobei während der Anfahrphase mit einer verkürzten Form von Telegrammen bzw. einer möglichst geringen Datenmenge gesendet wird, da insbesondere in diesem Zustand eine größere Nachfrage an Daten besteht. Um dieser erhöhten Nachfrage an Daten von Seiten des Steuergeräts nachzukommen, ohne die Batterien der Radelektroniken übermäßig zu beanspruchen, werden die Telegramme auf das erforderliche Mindestmaß gekürzt. Die Anhäufung der Telegramme wiederum sorgt dafür, dass alle Daten der mehreren Radelektroniken sicher von dem Steuergerät empfangen werden, die beispielsweise zur Achsunterscheidung dienen. Diese Übertragung wird hier auch als Burst-Mode bezeichnet, wobei klargestellt wird, dass diese Übertragung nicht mit der aus dem Mobilfunk bekannten Burst-Funkübertragung zu verwechseln ist.

In diesem Zusammenhang ist es besonders vorteilhaft, wenn zumindest oder auch ausschließlich während des dritten Modus, der dem Anfahrt-Zustand des Fahrzeuges zugeordnet ist, von dem jeweiligen elektronischen Modul bzw. der Radelektronik mehrere der zweiten Telegramme mit denselben Daten in der gehäuften Weise hintereinander an das Steuergerät gesendet werden. Wenn also vorzugsweise im Anfahr-Zustand ein Bündel von mehreren verkürzten Telegrammen übertragen wird, so kann innerhalb der relativ kurzen Anfahrphase aufgrund der höheren Nutzdatendichte sichergestellt werden, dass alle benötigten Daten übertragen werden. Außerdem wird durch die Kürze der Telegramme eine Reduzierung des Strombedarfs und somit eine Schonung der Batterie in der Radetektronik eneicht, bei gleichzeitiger Positionszuordnung der mehreren Radelektroniken.

Auch ist es von Vorteil, wenn die Daten in dem zweiten Telegramm zumindest oder ausschließlich eine Angabe über die Drehrichtung des jeweiligen Rades enthalten, und wenn die Drehrichtung ausgewertet wird, um zu ermitteln, ob das jeweilige Rad sich auf der linken Seite oder auf der rechten Seite des Fahrzeugs befindet. Durch diese Maßnahmen wird eine sehr einfach auszuführende Erkennung der ungefähren Radposition erreicht, sodass zumindest festgestellt werden kann, von welcher Fahrzeugseite aus die Daten gesendet werden. Hierzu ist keinerlei Rückkanal bzw. Triggersender erforderlich. Es muß lediglich die Drehrichtung erkannt werden. Hierzu wird vorzugsweise ein in dem elektrischen Modul untergebrachter Bewegungs-und/oder Beschleunigungs-Sensor verwendet.

Von besonderem Vorteil ist es auch, wenn die Daten in dem zweiten Telegramm, d.h. in dem verkürzten Telegramm, zumindest keine Angabe über den jeweiligen im Rad herrschenden Zustand und/oder über die in dem jeweiligen Rad herrschende Temperatur bzw. Druck enthält. Somit kann im Anfahrmodus das zweite Telegramm auch dahingehend verkürzt werden, dass nur solche Daten übertragen werden, die zur Bestimmung der ungefähren oder genaueren Radposition benötigt werden.

Von Vorteil ist es, wenn hingegen die Daten in dem ersten Telegramm zumindest eine Angabe über den jeweiligen Druckzustand im Rad und/oder über die dort herrschende Temperatur enthalten. Damit wird im Fahrt-Modus das längere Telegramm möglichst ausgiebig genutzt. In diesem Zusammenhang ist es vorteilhaft, wenn die Angabe über den Druckzustand mittels eines in der Radelektronik integrierten Drucksensors ermittelt wird bzw. wenn die Angabe über die Temperatur mittels eines integrierten Temperatursensors ermittelt wird.

Vorzugsweise kann das Steuergerät auch die von dem jeweiligen Modul (Radelektronik) empfangenen Daten auswerten und/oder durch Zusatzdaten ergänzen.

Von besonderem Vorteil ist es auch, wenn das Steuergerät und/oder ein damit verbundenes drahtloses Empfangsmittel, wie z.B. eine Antenne, bezogen auf die Entfernungen zu den Radachsen des Fahrzeuges unterschiedlich weit entfernt davon angeordnet ist, und wenn dann in dem Steuergerät die von dem jeweiligen Modul empfangenen Funksignale anhand ihrer Empfangsfeldstärken miteinander verglichen werden, um zu ermitteln, ob das jeweilige Rad sich auf einer der vorderen oder einer der hinteren Radachsen befindet. Somit wird also anhand der Empfangsfeldstärken auf einfache Weise festgestellt, ob die jeweilige Radelektronik auf einer Vorder- oder Hinterachse befestigt ist. In diesem Zusammenhang ist es weiterhin von Vorteil, wenn die in den empfangenen Daten enthaltene Angabe über die Drehrichtung des jeweiligen Rades anhand der empfangsverstärkenden Empfangssignale ausgewertet werden, um zu ermitteln, an welcher Stelle sich das jeweilige Rad befindet. Demnach kann also anhand der Drehrichtung zunächst bestimmt werden, ob sich das jeweilige Rad auf der linken oder rechten Fahrzeugseite befindet und kann anschließend anhand der Empfangsfeldstärken sofort ausgewertet werden, ob sich das Rad auf einer Vorder-oder Hinterachse befindet. Zusammenfassend kann somit genau die einzelne Radposition konkret, schnell und einfach ermittelt werden.

Vorzuziehen ist es auch, wenn von dem Steuergerät die von ihm ausgewerteten und/oder ergänzten Daten als Ergebnisdaten über eine Schnittstelle, insbesondere einen Datenbus, für weitere in dem Fahrzeug installierte Geräte und/oder Module bereitgestellt werden. Demnach kann das Steuergerät als zentrale Datenerfassungs-und Auswerteeinrichtung ausgestaltet werden, die über eine vorzugsweise standardisierte Schnittstelle ihre Ergebnisdaten für weitere Geräte und/oder Module, wie z.B. Anzeigevorrichtungen, bereitstellt. In diesem Zusammenhang ist es vorteilhaft, wenn von dem Steuergerät die Ergebnisdaten in Form eines dritten Datentelegramms über die Datenschnittstelle bzw. den Datenbus bereitgestellt werden. Dieses Datentelegramm kann unabhängig von den zuvor genannten Funkdatentelegrammen gestaltet, und z.B. ein standardisiertes Datenbus-Telegramm sein, wie etwa für den sogenannten CAN-Bus oder dergleichen. Es ist weiter vorteilhaft, wenn der Dutycycle in Abhängigkeit von der Anzahl der Fahrzyklen - der Wechsel zwischen Stand und Fahrbetrieb- von beispielsweise 50 von 50%/100% auf 0%/100% umgestellt wird, was eine weitere Energieeinsparung zur Folge hat.

Weiterhin vorteilhaft ist es, die Radelektronik nach der Fertigung in den Standmode mit einem Dutycycle von 0% LF zu versetzen.

Die Erfindung wird nachfolgend näher anhand verschiedener Ausführungsbeispiele beschrieben und mit Bezugnahme auf die beiliegenden Zeichnungen beschrieben, wobei:
- Fig. 1: die für das Verfahren und das System definierten verschiedenen Betriebsmodi in Form eines Zustandsdiagramms zeigt;
- Fig. 2: das erfindungsgemäße Verfahren mit seinen einzelnen Schritten in Form eines Flussdiagramms zeigt;
- Fig. 3: in schematischer Darstellung die Anordnung der verschiedenen Systemkomponenten in einem Fahrzeug zeigt;
- Fig. 4: in einer schematischen Darstellung den Aufbau eines erfindungsgemäßen elektronischen Moduls bzw. der Radelektronik zeigt; und
- Fig. 5: die unterschiedlichen, in dem Verfahren und System angewendeten Datentelegramme zeigt.

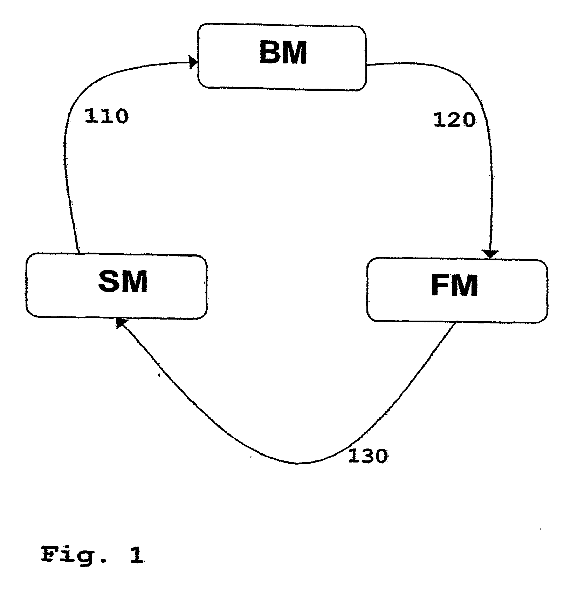

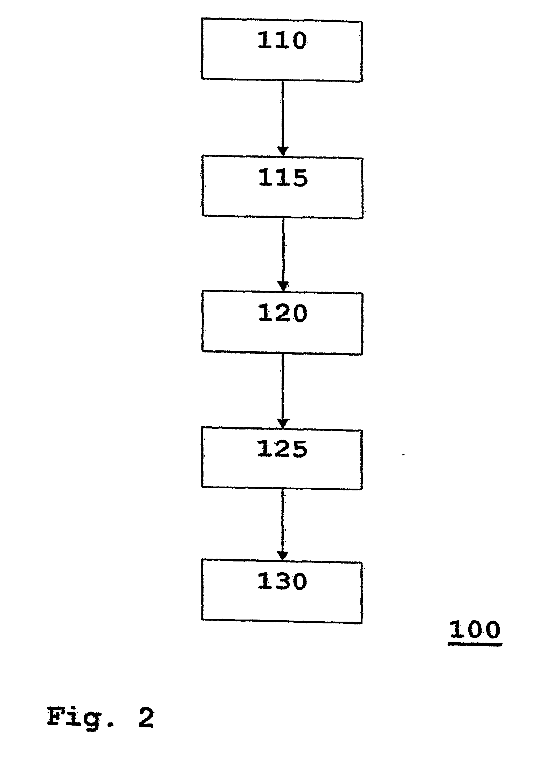

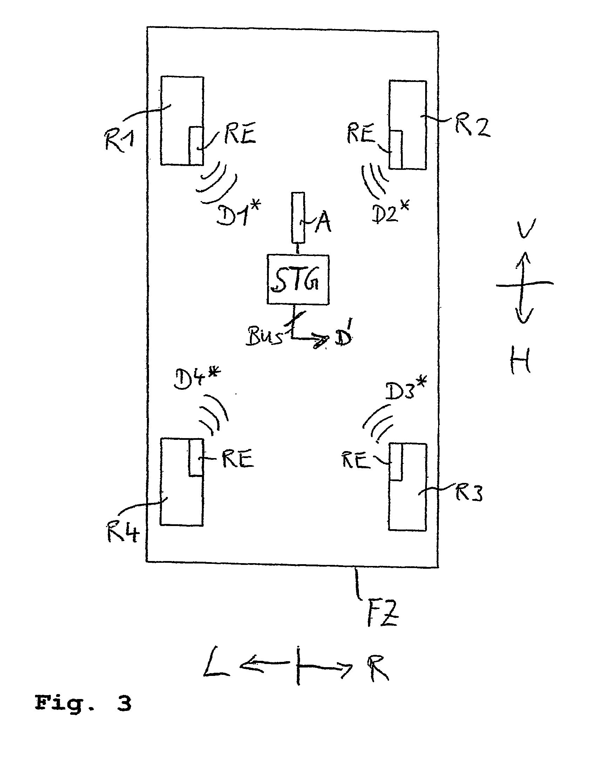

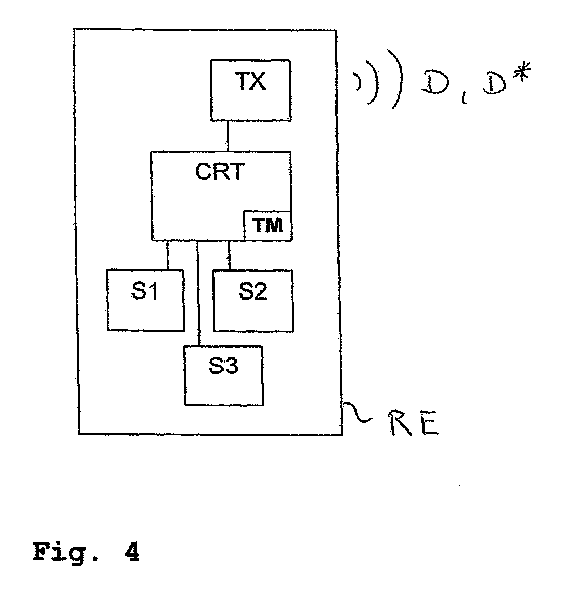

Bevor hier näher auf die Fig. 1 und 2 sowie auf das erfindungsgemäße Verfahren eingegangen wird, wird zunächst anhand der Fig. 3 und 4 der prinzipielle Aufbau des erfindungsgemäßen Systems erläutert:

Die Fig. 3 zeigt den prinzipiellen Aufbau bzw. die Installation eines Systems in einem Fahrzeug FZ, wobei in den einzelnen Rädern R1 bis R4 des Fahrzeuges elektronische Module bzw. Radelektroniken RE eingesetzt sind, die drahtlos ihre Daten D1 * bis D4* an ein Steuergerät STG senden, das als zentrale Steuereinheit in dem Fahrzeug angeordnet ist.

Das Steuergerät STG ist mit einem drahtlosen Empfangsmittel in Form einer Antenne A verbunden, um die Funksignale der einzelnen Radelektroniken RE zu empfangen und die darin enthaltenen Daten auszuwerten. Das Steuergerät STG ist über eine Datenschnittstelle bzw. einen Datenbus BUS mit weiteren Geräten und/oder Modulen (nicht dargestellt) verbunden und liefert an diese Ergebnisdaten D', welche aus der Auswertung der empfangenen Daten D1* bis D4* und gegebenenfalls weiterer Zusatzdaten gewonnen werden.

Das Steuergerät STG bzw. die Antenne befindet sich nicht in der Mitte des Fahrzeuges FZ, sondern ist vorzugsweise asymmetrisch zur Querachse des Fahrzeugs, also entweder im vorderen oder im hinteren Teil des Fahrzeugs, angeordnet. Somit wird erreicht, dass die Funksignale der einzelnen Radelektroniken RE mit unterschiedlich starken Empfangsfeldstärken an der Antenne A des Steuergerätes STG eintreffen, so dass festgestellt werden kann, ob die jeweilige Radelektronik sich im vorderen Teil V oder hinteren Teil H des Fahrzeuges FZ befindet.

Die Fig. 4 zeigt in Form eines Blockschaltbildes den Aufbau einer Radelektronik RE, die in einem Rad integriert ist. Die Radelektronik enthält im Wesentlichen einen Mikro-Controller CRT, der über einen integrierten Zeitgeber bzw. Timer TM verfügt und mit verschiedenen Sensoren S1 bis S3 verbunden ist. Die Sensoren sind beispielsweise ein Drucksensor S1, ein Temperatursensor S2 sowie wenigstens ein Beschleunigungssensor S3. Der Mikro-Controller CRT verarbeitet die von den Sensoren gelieferten Daten und gibt diese an eine Sendeeinheit TX ab, die wiederum die Daten D bzw. D* per Funk an das Steuergerät STG sendet.

Die Arbeitsweise des beschriebenen Systems und seiner Komponenten sowie das Prinzip des erfindungsgemäßen Verfahrens werden nun anhand der Fig. 1 und 2 sowie Fig. 5 näher beschrieben:

Bei dem erfindungsgemäßen Verfahren erfolgt zumindest während der Anfahrphase des Fahrzeuges die Übertragung der Daten D* von den jeweiligen elektronischen Modul bzw. der jeweiligen Radelektronik RE zum Steuergerät STG zumindest zeitweise in Form von mehreren Telegrammen DT*, die dieselben Daten D* beinhalten und die in einer gehäuften Weise hintereinander ausgesendet werden.

Dieser Modus ist in Fig. 1 als Modus BM gekennzeichnet und wird hier deshalb auch als Anhäufungsmodus bzw. Burst-Modus bezeichnet. Vorzugsweise wird dieser Modus nur in der Anfahrphase, also in dem Zustand betrieben, in dem das Fahrzeug von einem Stillstands-Modus SM in einen Fahrt-Modus FM übergeht. Demnach bezieht sich Burst-Modus BM insbesondere auf die Anfahrphase des Fahrzeuges, bei der von den einzelnen Radelektroniken RE die Daten D* in gehäuften, vorzugsweise verkürzten, Telegrammen DT* an das Steuergerät STG gesendet werden, welches dann anhand der Daten insbesondere auch die jeweilige Radposition ermitteln kann.

Ist die Anfahrphase des Fahrzeuges beendet und befindet sich das Fahrzeug im eigentlichen Fahrtmodus FM, so werden Daten D in Form von längeren Telegrammen DT gesendet, wobei auf eine Anhäufung, wie im Burst-Modus, verzichtet werden kann. Die im Fahrt-Modus FM übertragenen Daten D beinhalten möglichst alle Angaben, die die Radelektronik RE dem Steuergerät STG zur Verfügung stellen kann. Hingegen werden im Burst-Modus BM nur solche Daten D* übertragen, die für die Erkennung der einzelnen Radposition erforderlich sind, wie beispielsweise Angaben über die Drehrichtung RL des Rades und/oder eine Kennung ID bzw. die Identität für das Rad selbst.

Ist der Fahrt-Zustand des Fahrzeuges beendet, so wird der zweite Modus FM verlassen und zum Stillstand-Modus SM übergegangen. In diesem Modus SM werden vorzugsweise keine Daten von der Radelektronik RE ausgesendet. Sobald das Fahrzeug FZ wieder anfährt, was beispielsweise über einen Beschleunigungssensor (s. S3 in Fig. 4) festgestellt werden kann, erfolgt der Übergang in den Anfahrt-Modus bzw. Burst-Modus BM. Wie in Fig. 1 dargestellt ist, wird der Zustand des Fahrzeuges von einem ersten Modus SM, der den Stillstands-Zustand des Fahrzeuges beschreibt, in einen zweiten Modus FM, der den Fahrt-Zustand des Fahrzeuges beschreibt, über einen Zwischenmodus gewechselt, der einem weiteren Modus, nämlich dem Burst-Modus BM, entspricht. bzw. Dieser dritte Modus BM betrifft den jeweiligen Anfahrts-Zustand des Fahrzeuges.

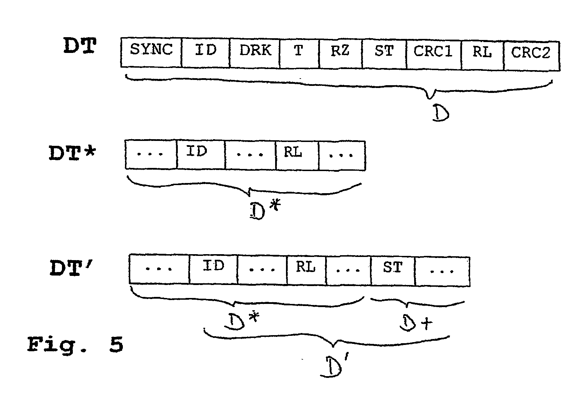

Anhand der Fig. 2 wird das Verfahren 100 mit seinen Schritten 110 bis 130 nun näher beschrieben, wobei auch auf die Figuren 1 und 5 Bezug genommen wird.

Das Verfahren 100 beginnt mit einem Schritt 110, mit dem vom ersten Modus SM ausgehend in den dritten Modus BM, den Anfahrmodus, umgeschaltet wird. Dies wird beispielsweise anhand von Beschleunigungssensoren erkannt (s. Sensor S3 in Fig. 4) und kann auch anhand eines Zeitgebers (siehe Timer TM in Fig. 4) so gesteuert werden, dass dieser Modus BM nur für eine begrenzte Zeitdauer bestehen bleibt. In einem Schritt 115 wird die Datenübertragung für diesen Modus BM durchgeführt, in dem das jeweilige Modul bzw. die Radelektronik RE ihre Daten D* in mehreren angehäuften Telegrammen an das Steuergerät STG sendet.

Wie in Fig. 5 dargestellt, sendet die jeweilige Radelektronik RE ein verkürztes Telegramm DT* aus, welches nur einige Daten D* aus den üblicherweise vielen Daten D umfasst, welche im normalen Fahrt-Modus FM in längeren Datentelegrammen DT übertragen werden. Bei dem kurzen Telegramm DT* handelt es sich um ein beispielsweise 9-Byte-langes Telegramm, das zumindest eine eindeutige Kennung ID für die jeweilige Radelektronik RE und somit auch für das jeweilige Rad enthält, sowie eine Angabe RL enthält, die die Drehrichtung des jeweiligen Rades anzeigt. Bereits anhand der Kennungen ID kann dann das Steuergerät STG prüfen, ob alle Radelektroniken RE betriebsbereit sind bzw. ob zumindest vier verschiedene Kennungen ID und somit Räder erkannt werden. Außerdem kann das Steuergerät SZG anhand der Angabe RL erkennen, ob sich das jeweilige Rad auf der linken oder rechten Fahrzeugseite befindet. Wird nämlich beispielsweise anhand der Angabe RL angezeigt, dass sich das Rad rechtsherum dreht, so wird angenommen, dass sich das Rad auf der rechten Fahrzeugseite R befindet. Im anderen Fall wird angenommen, dass sich das Rad auf der linken Fahrzeugseite L befindet. Somit kann anhand dieser wenigen Angaben bereits eine erste Lokalisierung der Räder durchgeführt werden.

Im Schritt 115 werden außerdem die Empfangs-Feldstärken der jeweiligen empfangenen Signale von dem Steuergerät STG ausgewertet und miteinander verglichen. Dadurch, dass das Steuergerät bzw. die Antenne A (siehe auch Fig. 3) sich näher an der Fahrzeugfront oder am Fahrzeugheck befindet, kann anhand der Empfangsfeldstärken leicht festgestellt werden, ob sich die jeweilige Radelektronik RE an einer Vorderachse V oder an einer Hinterachse H des Fahrzeuges FZ befindet. Zusammen mit der zuvor ermittelten Seitenlage und/oder der Drehrichtung der Radelektronik (linke oder rechte Fahrzeugseite) ergibt sich somit eine genaue Positionsbestimmung der einzelnen Räder. Wird also anhand der Angabe RL beispielsweise ein rechtsdrehendes Rad angezeigt und wird für den Fall, dass die Antenne A näher zu den Vorderachsen hin montiert ist, eine relativ hohe Empfangs-Feldstärke von dem Steuergerät STG erkannt, so ist davon auszugehen, dass sich dieses Rad auf der rechten Fahrzeugseite R an der Vorderachse V befindet. Bezogen auf die Darstellung nach Fig. 3 wäre somit die Position des Rades R2 eindeutig erkannt. Die Erkennung der anderen Räder erfolgt in analoger Vorgehensweise. Demnach ist im Schritt 115 bereits anhand der kurzen Datentelegramme DT* eine schnelle und eindeutige Positionierung der einzelnen Räder möglich und durch einzelne DT im Schritt 115 auch eine aktuelle Druckanzeige im FZ möglich.

Zudem stellt das Aussenden von verkürzten Datentelegramme DT* in einer gehäuften Weise, bzw. im Burst-Mode, sicher, dass die erforderlichen Daten auch vollständig und richtig von dem Steuergerät STG empfangen werden. Das verkürzte Telegramm DT* kann neben den bereits genannten Angaben ID und RL auch noch weitere Daten enthalten, wie etwa Synchronisationsdaten sowie Prüfdaten, wie z.B. CheckSum-Daten.

Insgesamt aber ist das Telegramm DT* im Vergleich zu dem üblichen Telegramm DT deutlich verkürzt. Das Telegramm DT* umfasst z.B. nur 9 Byte, wohingegen das längere Telegramm DT z.B. 15 Byte umfasst. Wie in Fig. 5 gezeigt, kann das längere Telegramm DT, welches im späteren Fahrt-Modus FM gesendet wird, auch noch Angaben über den Druckzustand DRK und über die Temperatur T im jeweiligen Reifen enthalten. Diese Daten werden über die entsprechenden Sensoren, nämlich Drucksensor S1 bzw. Temperatursensor S2 (siehe Fig. 4) erfasst. Außerdem kann das Telegramm DT auch noch eine Angabe RZ über die Restlebezeit der Batterie enthalten.

Das hier vorgeschlagene Verfahren nutzt für die Sendeereignisse während des Anfahrens des Fahrzeuges den genannten Burst-Modus BM, der eine Anhäufung von verkürzten Telegrammen DT* darstellt. Dabei werden innerhalb einer kurzen Zeitspanne, von beispielsweise 1 Minute, viele Telegramme DT* mit demselben oder zumindest mit ähnlichem Dateninhalt gesendet. Durch diese Übertragung ist eine sehr schnelle Radzuordnung möglich, wobei aufgrund der Verkürzung der Telegrammlänge von z.B. 15 Byte auf 9 Byte auch Energie eingespart wird. Werden beispielsweise in einer Anhäufung 25 Telegramme hintereinander gesendet, so ergibt sich aufgrund der Verkürzung des Telegramms DT* gegenüber dem normalen Telegramm DT eine Reduzierung des Energiebedarfs um etwa 40%. Dies wird ohne jeglichen Informationsverlust erreicht.

Ist die Anfahrphase bzw. der Modus BM beendet, so wird in einem Schritt 120 auf den nächsten Modus umgeschaltet, nämlich auf den Modus FM, welcher den Fahrt-Zustand des Fahrzeuges betrifft. In einem Schritt 125 wird dann das längere Datentelegramm DT verwendet, um nun möglichst alle erfassten Daten D von der jeweiligen Radelektronik RE an das Steuergerät STG zu senden. Auch in diesem Modus FM kann, muss aber nicht, eine angehäufte Übertragung des Datentelegramms DT erfolgen. In einem Schritt 130 wird nach Beendigung des Pfadzustandes in den Stillstands-Zustand übergegangen, d.h. in den Modus SM. Wie bereits oben beschrieben, erfolgt in diesem ersten Modus SM keine Datenübertragung.

Durch die verschiedenen Modi wird insgesamt also eine optimale Datenübertragung hinsichtlich des Informationsgehalts wie auch der Energieeinsparung ermöglicht. Durch die hier vorgeschlagene Differenzierung zwischen eigentlichem Fahrt-Zustand und dem Anfahr-Zustand des Fahrzeugs wird insbesondere für den Anfahrphase des Fahrzeuges eine optimierte Datenübertragung mittels verkürzter Datentelegramme ermöglicht.

Neben der eigentlichen Datenübertragung zwischen der jeweiligen Radelektronik RE und dem Steuergerät STG umfasst die Erfindung auch noch eine weitere Übertragung von Ergebnisdaten DT' (siehe Fig. 5) von dem Steuergerät STG an weitere im Fahrzeug installierte Geräte bzw. Module, wie z.B. an Anzeigevorrichtungen in der Instrumententafel.

Dazu wertet das Steuergerät STG die empfangenen Daten D bzw. D* aus und ergänzt diese gegebenenfalls durch weitere Daten D+, um daraus Ergebnisdaten D' zu bilden. Diese werden z.B. mittels eines standardisierten Busdaten-Telegramms DT' an die weiteren Geräte bzw. Module übertragen. Als zusätzliche Daten D+ kann beispielsweise ein Status-Bit oder -Byte ST angesehen werden, das die von dem Steuergerät STG ermittelten Empfangs-Feldstärken betrifft und für die jeweilige Radelektronik RE anzeigt, ob sich diese auf einer Vorderachse oder Hinterachse des Fahrzeuges befindet. Das Status-Bit ST kann also den Zustand V oder den Zustand H einnehmen (siehe Fig. 3). Zusammen mit der von der Radelektronik gesendeten Angabe RL, die den Status L oder R einnehmen kann, ergibt sich dann eine eindeutige Radzuordnung.

Das hier beschriebene erfindungsgemäße Verfahren und die das Verfahren ausführenden Vorrichtungen bzw. Einrichtungen betreffen besonders vorteilhafte Ausgestaltungen und sollen deshalb nicht in einem beschränkenden Sinne verstanden werden. Der Schutzumfang der Erfindung umfasst vielmehr auch weitere Modifikationen und wird insbesondere durch die Formulierung der Patentansprüche bestimmt.

### Bezugszeichenliste

- SM: erster Modus (Stand-Modus)
- FM: zweiter Modus (Fahrt-Modus)
- BM: dritter Modus (Burst-Modus)

- 100: Verfahren mit (Teil-)Schritten 110-130
- DRK: Angaben über Druckzustände in Rädern(R1-R4)
- FZ: Fahrzeug
- STG: Steuergerät
- A: Antenne
- BUS: Schnittstelle bzw. Datenbus
- R1 - R4: Räder
- RE: elektronisches Modul bzw. Rad-Elektronik
- S1, S2, S3: versch. Sensoren für Druck (S1), Temperatur (S2) und Beschleunigung (S3)
- CRT: Mikro-Controller
- TX: Sender (im Rad-Elektronik)

- D: Daten (normaler Umfang) von Rad-Elektronik
- D*: Daten (verkürzter Umfang) von Rad-Elektronik
- D+: Zusatzdaten vom Steuergerät
- D': Ergebnisdaten vom Steuergerät (für Datenbus)
- DT: Datentelegramm (normal)
- DT*: Datentelegramm (verkürzt)
- DT': Datentelegramm (für Ergebnisdaten auf Datenbus)

- ID, RL, DRK, T, RZ, ST: Daten bzw. Angaben zum jeweiligen Rad/Reifen, insbes. Kennung (ID), Rechts-Links (RL), Druck (DRK)
- SYNC, CRC1, CRC2: Daten zur Synchronisation bzw. zur Plausibilitäts-Prüfung (CheckSum)

## Patentansprüche

1. Verfahren (100) zum Überwachen und drahtlosen Signalisieren von Daten (D, D*) die Angaben (DRK) über die in Luftreifen von Rädern (R1, R2, R3, R4) eines Fahrzeuges (FZ) herrschenden Druckzustände enthalten, wobei die Daten (D, D*) jeweils von in den Rädern (R1, R2, R3, R4) angeordneten elektronischen Modulen (RE) drahtlos an ein im Fahrzeug (FZ) angeordnetes Steuergerät (STG) gesendet werden, wobei während eines ersten Modus (SM), der einem Stillstands-Zustand des Fahrzeuges (FZ) zugeordnet ist, keine Daten gesendet werden, und wobei während mindestens eines weiteren Modus (FM, BM), der einem anderen Zustand des Fahrzeuges (FZ) zugeordnet ist, die Daten (D, D*) in Form von Telegrammen (DT, DT*) von dem jeweiligen elektronischen Modul (RE) an das Steuergerät (STG) gesendet werden; wobei zumindest zeitweise von dem jeweiligen elektronischen Modul (RE) n Telegramme (DT, DT*) mit den Daten (D, D*) pro Zeiteinheit an das Steuergerät (STG) gesendet werden, wobei n eine Funktion der Zeit ist, und wobei während eines weiteren Modus (FM), der einem Fahrt-Zustand des Fahrzeuges (FZ) zugeordnet ist, die Daten mit einer geringeren Sendehäufigkeit gesendet werden, und wobei während eines anderen Modus (BM), der einem Anfahr-Zustand des Fahrzeuges (FZ) zugeordnet ist, die Daten mit einer höheren Sendehäufigkeit gesendet werden, **dadurch gekennzeichnet, dass** während eines vierten Modus (FM'), der einem Fahrt-Zustand des Fahrzeuges (FZ) zugeordnet ist, die Daten mit einer noch geringeren Sendehäufigkeit gesendet werden, wobei der vierte Modus (FM') nach etwa 15 Minuten nach Fahrtantritt beginnt.

2. System zum Überwachen und drahtlosen Signalisieren von Daten, die Angaben (DRK) über die in Luftreifen von Rädern (R1, R2, R3, R4) eines Fahrzeuges (FZ) herrschenden Druckzustände enthalten, wobei das System ein im Fahrzeug (FZ) angeordnetes Steuergerät (STG) aufweist und jeweils in den Rädern (R1, R2, R3, R4) angeordnete elektronischen Module (RE) aufweist, die die Daten (D) drahtlos an das Steuergerät (STG) senden, wobei während eines ersten Modus (SM), der einem Stillstands-Zustand des Fahrzeuges (FZ) zugeordnet ist, die elektronischen Module (RE) keine Daten senden, und wobei während eines zweiten Modus (FM), der einem Fahrt-Zustand des Fahrzeuges (FZ) zugeordnet ist, das jeweilige elektronische Modul (RE) die Daten in Form von Telegrammen (D, D*) an das Steuergerät (STG) sendet; wobei das jeweilige elektronische Modul (RE) zumindest zeitweise Telegramme mit unterschiedlicher Sendehäufigkeit an das Steuergerät (STG) sendet, und wobei während eines dritten Modus (BM), der einem Anfahr-Zustand des Fahrzeuges (FZ) zugeordnet ist, die Daten mit einer höheren Sendehäufigkeit gesendet werden als während des zweiten Modus (FM), **dadurch gekennzeichnet, dass** während eines vierten Modus (FM'), der einem Fahrt-Zustand des Fahrzeuges (FZ) zugeordnet ist, die Daten mit einer noch geringeren Sendehäufigkeit gesendet werden, wobei der vierte Modus (FM') nach etwa 15 Minuten nach Fahrtantritt beginnt.

3. Elektronisches Modul (RE) zum Überwachen und drahtlosen Signalisieren von Daten, die Angaben über die in Luftreifen von Rädern eines Fahrzeugs herrschenden Druckzustände enthalten, wobei das elektronische Modul (RE) zumindest zeitweise Telegramme mit unterschiedlicher Sendehäufigkeit an das Steuergerät (STG) sendet, wobei ein erster Modus (SM) einem Stillstands-Zustand des Fahrzeugs zugeordnet ist, wobei während eines weiteren Modus (FM), der einem Fahrt-Zustand des Fahrzeuges (FZ) zugeordnet ist, die Daten mit einer geringeren Sendehäufigkeit gesendet werden, und wobei während eines anderen Modus (BM), der einem Anfahr-Zustand des Fahrzeuges (FZ) zugeordnet ist, die Daten mit einer höheren Sendehäufigkeit gesendet werden, **dadurch gekennzeichnet, dass** während eines vierten Modus (FM'), der einem Fahrt-Zustand des Fahrzeuges (FZ) zugeordnet ist, die Daten mit einer noch geringeren Sendehäufigkeit gesendet werden, wobei der vierte Modus (FM') etwa 15 Minuten nach Fahrtantritt beginnt.

## Claims

1. A method (100) for monitoring and wirelessly signaling data (D, D*) containing information (DRK) about the pressure conditions present in pneumatic tires of wheels (R1, R2, R3, R4) of a vehicle (FZ), the data (D, D*) being transmitted wirelessly by electronic modules (RE) disposed in the wheels (R1, R2, R3, R4) to a controller (STG) disposed in the vehicle (FZ), no data being transmitted during a first mode (SM) which is associated with a stopped state of the vehicle (FZ), and data (D, D*) being transmitted in the form of datagrams (DT, DT*) by the respective electronic module (RE) to the controller (STG) during at least one further mode (FM, BM) which is associated with a different state of the vehicle (FZ), wherein in that least intermittently n datagrams (DT, DT*) containing the data (D, D*) are transmitted per unit of time to the controller (STG) by the respective electronic module (RE), with n being a function of the time, and wherein the data is transmitted with a lower transmission frequency during a further mode (FM), which is associated with a driving state of the vehicle (FZ), and that data is transmitted with a higher transmission frequency during another mode (BM), which is associated with a starting state of the vehicle (FZ), **characterized in that** the data is transmitted with an even lower transmission frequency during a fourth mode (FM'), which is associated with a driving state of the vehicle (FZ), wherein the fourth mode (FM') begins approximately 15 minutes after starting to drive.

2. A system for monitoring and wirelessly signaling data containing information (DRK) about the pressure conditions presents in pneumatic tires of wheels (R1, R2, R3, R4) of a vehicle (FZ), the system comprising a controller (STG) disposed in the vehicle (FZ) and electronic modules (RE) which are disposed in the wheels (R1, R2, R3, R4) and wirelessly transmit the data (D) to the controller (STG), no data being transmitted during a first mode (SM) which is associated with a stopped state of the vehicle (FZ), and data being transmitted in the form of datagrams (DT, D*) by the respective electronic module (RE) to the controller (STG) during a second mode (FM) which is associated with a driving state of the vehicle (FZ), wherein at least intermittently datagrams are transmitted with varying transmission frequency to the controller (STG) by the respective electronic module (RE), wherein during a third mode (BM) which is associated with a starting phase of the vehicle (FZ) data are transmitted with a larger frequency than during the second mode (FM), **characterized in that** the data is transmitted with an even lower transmission frequency during a fourth mode (FM'), which is associated with a driving state of the vehicle (FZ), wherein the fourth mode (FM') begins approximately 15 minutes after starting to drive.

3. An electronic module (RE) for monitoring and wirelessly signaling data information about the pressure conditions present in pneumatic tires of wheels of a vehicle, wherein the electronic module (RE) transmits at least intermittently datagrams with varying transmission frequency to the controller (STG), wherein a first mode (SM) is associated with a stopped state of the vehicle (FZ), wherein during a further mode (FM) which is associated with a driving state of the vehicle (FZ) data are transmitted with a lower frequency, and wherein during another mode (BM) which is associated with a starting phase of the vehicle (FZ) data are transmitted with a larger frequency, **characterized in that** the data is transmitted with an even lower transmission frequency during a fourth mode (FM'), which is associated with a driving state of the vehicle (FZ), wherein the fourth mode (FM') begins approximately 15 minutes after starting to drive.

## Revendications

1. Procédé (100) de surveillance et de signalisation sans fil de données (D, D*), contenant des indications (DRK) sur les pressions de pneumatiques de roues (R1, R2, R3, R4) d'un véhicule (FZ), les données (D, D*) étant envoyées sans fil par des modules électroniques (RE) disposés dans les roues (R1, R2, R3, R4) à un appareil de commande (STG) monté dans le véhicule (FZ), aucune donnée n'étant envoyée dans un premier mode (SM) associé à un état d'immobilisation du véhicule (FZ), et dans au moins un autre mode (FM, BM) associé à un autre état du véhicule (FZ), les données (D, D*) étant envoyées sous forme de télégrammes (DT, DT*) par le module électronique correspondant (RE) à l'appareil de commande (STG); n télégrammes (DT, DT*) contenant les données (D, D*) étant envoyés par unité de temps à l'appareil de commande (STG) au moins temporairement par le module électronique correspondant (RE), n étant fonction du temps, et dans au moins un autre mode (FM) associé à un état de roulage du véhicule (FZ), les données étant envoyées avec une fréquence d'émission réduite, et dans au moins un autre mode (BM) associé à un état de démarrage du véhicule (FZ), les données étant envoyées avec une fréquence d'émission accrue, **caractérisé en ce que** dans un quatrième mode (FM) associé à un état de roulage du véhicule (FZ), les données étant envoyées avec une fréquence d'émission réduite encore davantage, le quatrième mode (FM') commençant environ 15 minutes après le début du roulage.

2. Procédé de surveillance et de signalisation sans fil de données, contenant des indications (DRK) sur les pressions de pneumatiques de roues (R1, R2, R3, R4) d'un véhicule (FZ), le système comprenant un appareil de commande (STG) monté dans le véhicule (FZ), de même que des modules électroniques (RE) montés dans les roues (R1, R2, R3, R4) envoyant sans fil les données (D) à l'appareil de commande (STG), les modules électroniques n'envoyant aucune donnée dans un premier mode (SM) associé à un état d'immobilisation du véhicule (FZ), et dans un autre deuxième mode (FM) associé à un état de roulage du véhicule (FZ), le module électronique correspondant (RE) envoie les données sous forme de télégrammes (D, D*) à l'appareil de commande (STG); le module électronique correspondant (RE) envoyant au moins temporairement les télégrammes avec une fréquence d'émission différente à l'appareil de commande (STG), et dans un autre troisième mode (BM) associé à un état de démarrage du véhicule (FZ), les données étant envoyées avec une fréquence d'émission accrue par rapport au le deuxième mode (FM), **caractérisé en ce que** dans un quatrième mode (FM') associé à un état de roulage du véhicule (FZ), les données sont envoyées avec une fréquence d'émission réduite encore davantage, le quatrième mode (FM') commençant environ 15 minutes après le début du roulage.

3. Module électronique (RE) de surveillance et de signalisation sans fil de données, contenant des indications sur les pressions de pneumatiques de roues d'un véhicule, le module électronique (RE) envoyant au moins temporairement des télégrammes avec une fréquence d'émission différente à l'appareil de commande, un premier mode (SM) étant associé à un état d'immobilisation du véhicule, dans un autre mode (FM) associé à un état de roulage du véhicule (FZ), les données étant envoyées avec une fréquence d'émission réduite, et dans un autre troisième mode (BM) associé à un état de démarrage du véhicule (FZ), les données étant envoyées avec une fréquence d'émission accrue, **caractérisé en ce que** dans un quatrième mode (FM') associé à un état de roulage du véhicule (FZ), les données sont envoyées avec une fréquence d'émission réduite encore davantage, le quatrième mode (FM') commençant environ 15 minutes après le début du roulage.
